# EUROPÄISCHE PATENTSCHRIFT

(11) **EP 1 107 682 B1**
(45) Veröffentlichungstag und Bekanntmachung des Hinweises auf die Patenterteilung: **05.11.2003**
(21) Anmeldenummer: 99941307.3
(22) Anmeldetag: 27.08.1999
(51) Int. Cl.: A47J 37/06, A47J 37/07

(54) **VORRICHTUNG ZUR ZUBEREITUNG VON SPEISEN**
DEVICE FOR PREPARING FOOD
DISPOSITIF PERMETTANT DE PREPARER DES PLATS

(30) Priorität: 28.08.1998 AT 146998; 28.08.1998 AT 147098
(43) Veröffentlichungstag der Anmeldung: 20.06.2001
(73) Patentinhaber: Gschwind, Ernst, 8511 St. Stefan (AT)
(72) Erfinder: Gschwind, Ernst, 8511 St. Stefan (AT)
(74) Vertreter: Gibler, Ferdinand, Dipl.Ing. Dr. techn.
(86) Internationale Anmeldenummer: AT9900209
(87) Internationale Veröffentlichungsnummer: WO00011995

(56) Entgegenhaltungen:
- WO-A-95/30365
- DE-A- 2 529 409
- FR-A- 2 554 560

## Beschreibung

Die Erfindung betrifft eine Vorrichtung zur Zubereitung von Speisen, wie z.B. eine Grill- bzw. Backeinrichtung, mit einer Einrichtung zur Erwärmung der Luft und gegebenenfalls einem Rost, wobei oberhalb der Einrichtung zur Erwärmung der Luft von einem Kühlmittel durchströmbare Hohlprofile angeordnet sind, deren Oberseiten rinnenförmig ausgebildet sind und Ablaufrinnen für die Gargutsäfte der Speisen bilden.

Bei bisher bekannten Vorrichtungen dieser Art wird das durch die Hohlprofile strömende Kühlmittel, das eine Überhitzung und die daraus resultierende Verschmorung der Gargutsäfte vermeiden hilft, entweder nicht bewegt, wodurch nur eine geringe Kühlwirkung entsteht, oder es findet eine Zwangsbewegung durch die Hohlprofile statt, die von einer externen Energiequelle abhängig ist, etwa über eine batteriebetriebene Kühlmittelpumpe. Letzteres hat wiederum zur Folge, daß die Zubereitungsvorrichtung nur dann richtig funktioniert, wenn die geeigneten Batterien oder zumindest ein Netzanschluß verfügbar ist. Weiters bedeutet der Einbau einer Kühlmittelpumpe einen zusätzlichen Herstellungs- und Wartungsaufwand.

Die WO 95/30365 A1 offenbart eine Grilleinrichtung mit einer Einrichtung zur Erwärmung der Luft, einem Rost und dazwischenliegenden Hohlprofilen, welche Ablaufrinnen umfassen. Mittels einer Zwangsbewegung wird ein Kühlmittel durch die Hohlprofile mittels eines Fördermittels gefördert. Nachteilig an einer Grilleinrichtung gemäß der WO 95/30365 A1 ist, daß die Zubereitungsvorrichtung nur dann richtig funktioniert, wenn eine externe Energiequelle für das Fördermittel verfügbar ist.

Aus der DE 25 29 409 A1 geht ein Grillrost aus mehreren, im Abstand voneinander angeordneten Roststäben hervor, bei dem die Zwischenräume der Roststäbe auf der Unterseite des Rostes und im Abstand von diesem abgedeckt sind, sodaß - in Projektion gesehen - der Rost eine geschlossene Oberfläche bildet und kein Fett mehr auf die glühende Heizkohle tropfen kann. Durch die Anordnung der Abdeckung im Abstand von der Unterseite des Grillrostes verbleiben Durchtrittsschlitze für die aufsteigende Heißluft zum Erhitzen des Grillgutes. Die Abdeckung ist aus zweilagigen Rinnenprofilstäben gebildet, die einen mit Luft gefüllten Hohlraum als Wärmeisolierung in sich ausbilden. Nachteilig an einem Grillrost gemäß der DE 25 29 409 A1 ist, daß durch die Hohlräume eine Überhitzung der Rinnenprofilstäbe und ein Verbrennen des darin befindlichen Garsaftes zwar verzögert, nicht jedoch unterbunden werden kann.

Die FR 2 554 560 A1 beschreibt einen Grillrost mit von einem zirkulierenden Kühlmittel, z.B. Luft, durchströmte Hohlprofile, welche als Reflektoren gegen eine übermäßige Erwärmung von Objekten durch die von Heizstäben ausgestrahlte Wärme vorgesehen sind. Nachteilig an einem Grillrost gemäß der FR 2 554 560 A1 ist, daß zum Zirkulieren des Kühlmittels eine von externen Energiequelle angetriebene Antriebseinheit erforderlich ist.

Aufgabe der Erfindung ist es daher, eine Vorrichtung der eingangs genannten Art anzugeben, bei der eine Zwangsbewegung des Kühlmittels ohne externe Energiequelle verwirklicht werden kann.

Erfindungsgemäß wird dies dadurch erreicht, daß der Hohlraum innerhalb der Hohlprofile jeweils zumindest aus einer, vorzugsweise zwei, in Längsrichtung der Hohlprofile durchgehend verlaufenden Kammer(n) gebildet ist, wobei die Kammer(n) mittels zumindest einer Vorrichtung zur Ausbildung einer Kühlmittelströmung unter Ausnutzung einer in der Zubereitungsvorrichtung entstehenden Druckdifferenz von Kühlmittel durchströmbar ist bzw. sind.

Auf diese Weise können eine oder mehrere Kammern der Hohlprofile von dem Kühlmittel durchströmt werden, ohne daß dabei eine Abhängigkeit von einer externen Energiequelle gegeben ist. Auch die Herstellung und Wartung einer erfindungsgemäßen Vorrichtung vereinfacht sich durch den Wegfall einer von einer externen Energiequelle betriebenen Kühlmittelbewegungsvorrichtung. Die Vorrichtung zur Kühlmittelströmungsausbildung verursacht über die infolge z.B. einer Verbrennung, einer Höhendifferenz, von Dichteunterschieden o.ä. entstehende Druckdifferenz eine Kühlmittelbewegung, sodaß die bei der erfindungsgemäßen Zubereitungsvorrichtung z.B. für die Erwärmung umgesetzten Energien nicht nur zur Garguterwärmung genutzt werden.

Besonders bevorzugt ist gemäß einem Ausführungsbeispiel der Erfindung, daß das Kühlmittel ein Gas, vorzugsweise Luft, ist. Dadurch kann die aus der Umgebung angesaugte Luft als Kühlmittel verwendet werden.

Eine besonders effiziente Vorrichtung zur Ausbildung einer Kühlmittelströmung läßt sich gemäß einer Variante der Erfindung durch eine Saugzugvorrichtung erzielen, die eine relativ hohe Kühlmittelbewegung ermöglicht.

In weiterer Ausbildung der Erfindung kann vorgesehen sein, daß die Saugzugvorrichtung jeweils durch eine Ansaugöffnung der Erwärmungseinrichtung gebildet ist, daß die oder eine der Kammern der Hohlprofile an einem stirnseitigen Ende über einen Verbindungskanal mit der Ansaugöffnung in Verbindung steht, und daß das gegenüberliegende andere stirnseitige Ende der Kammer(n) offen ist.

Jede Erwärmungseinrichtung erzeugt durch die von ihr ausgehende Wärme eine Luftbewegung, besonders der bei der Verbrennung entstehende Saugzug bewirkt eine Luftströmung zur Verbrennungsquelle hin. Diese während der Verbrennung entstehende Sogwirkung kann daher auch für die Saugzugwirkung durch die Hohlprofile eingesetzt werden. Weiters kann bei der Zufuhr eines gasförmigen Brennstoffes der um die Brennstoffströmung sich ausbildende Unterdruck für die Kühlmittelbewegung angewandt werden.

In weiterer Ausbildung der Erfindung kann vorgesehen sein, daß die Erwärmungseinrichtung aus mehreren, vorzugsweise stabförmigen, Gasbrennern gebildet ist, deren Gas-Zuleitungen sich durch die zugeordneten Verbindungskanäle hindurcherstrecken, wobei in der Gas-Zuleitung innerhalb des Verbindungskanals die Luft-Ansaugöffnung ausgebildet ist.

Die Gasbrenner ermöglichen eine flächenhafte Erwärmung des Gargutes ohne dabei störende Verbrennungsabgase entstehen zu lassen.

Dabei kann der Gasbrenner entlang seiner Länge jeweils voneinander beabstandete Gas-Austrittsdüsen aufweisen, sodaß eine über die Länge der Gasbrenner gleichmäßig verteilte Gasverbrennung und gleichmäßige Erwärmung des Gargutes entsteht.

Um das Herabtropfen von Gargutsäften auf die Gasbrenner zu vermeiden, kann gemäß einer weiteren Ausführungsform der Erfindung vorgesehen sein, daß die stabförmigen Gasbrenner sich parallel zu den Hohlprofilen erstrecken.

Gemäß einer anderen Variante der Erfindung kann vorgesehen sein, daß die Saugzugvorrichtung aus einem kaminartigen - in Gebrauchslage - sich nach oben erstreckenden Abzugskanal gebildet ist, daß jeweils die oder eine der Kammern der Hohlprofile an ihrem stirnseitigen Ende mit dem Abzugskanal verbunden ist, der an seinem oberen Ende offen ist, und daß das gegenüberliegende andere stimseitige Ende der Kammer(n) offen ist.

Auf diese Weise kann der Höhenunterschied zwischen der Lufteintrittstelle an den Hohlprofilenden und dem oberen Ende des Abzugskanals dazu genutzt werden, um eine entsprechende Saugzugwirkung auf die durch die Hohlprofile strömende Luft entstehen zu lassen.

Zur weiteren Steigerung des Kaminzuges kann gemäß einem weiteren Ausführungsbeispiel der Erfindung vorgesehen sein, daß der kaminartige Abzugskanal mit seitlich angebrachten Lufteinlaßschlitzen versehen ist. Auf diese Weise kann die von der Erwärmungseinrichtung aufsteigende warme Luft niedriger Dichte in den Abzugskanal eintreten und verstärkt damit den auf die durch die Hohlprofilkammern hindurchströmende Luft wirkenden Saugzug.

Bevorzugt ist dabei in Weiterbildung der Erfindung, daß der kaminartige Abzugskanal einen rechteckförmigen Querschnitt aufweist.

Eine besonders gleichmäßige Verteilung der von der Erwärmungseinrichtung aufsteigenden, warmen Luft kann gemäß einer anderen Variante der Erfindung dadurch erzielt werden, daß die Hohlprofile - in Gebrauchslage gesehen - horizontal angeordnet sind und die Ablaufrinnen gegen die Horizontale geneigt angeordnet sind.

In weiterer Ausgestaltung der Erfindung kann vorgesehen sein, daß die Kammer(n) zusätzlich mit einer Vorrichtung zur Zwangskühlung, z.B. einem Luft-Ventilator, einer Kühlmittelpumpe od. dgl., verbunden ist bzw. sind. Damit kann zusätzlich zu der durch Druckdifferenz entstehenden Kühlmittelströmung eine Zwangskühlung erreicht werden, die bei nicht ausreichender Kühlleistung eingeschaltet werden kann.

Konstruktiv auf einfache Weise herstellbare und mit den Saugzugvorrichtungen verbindbare Hohlprofile können dadurch erzielt werden, daß zwei Kammern vorgesehen sind, die übereinanderliegend angeordnet sind.

Gemäß einer weiteren Variante der Erfindung kann vorgesehen sein, die Erwärmungseinrichtung aus einem Brennraum zur Befüllung mit Holzkohle und die Ansaugöffnung durch eine Luftzuführungsöffnung für die Primärluftzufuhr in den Brennraum zum Abbrand von Holzkohle gebildet ist.

Die bei der Verbrennung der Holzkohle von außen angesaugte Luft durchströmt dabei vorher die Hohlprofile und erreicht dabei eine meßbare Herabsetzung der Gargutsafttemperatur.

Die Erfindung betrifft weiters eine Vorrichtung zur Zubereitung von Speisen, wie z.B. eine Grill- bzw. Backeinrichtung, mit einer Einrichtung zur Erwärmung der Luft und gegebenenfalls einem Rost, wobei oberhalb der Einrichtung zur Erwärmung der Luft mehrere, vorzugsweise in einer Ebene angeordnete, voneinander beabstandete Ablaufrinnen für die Gargutsäfte der Speisen vorgesehen sind.

Ablaufrinnen für Einrichtungen wie Griller und Backrohre o.ä. sind seit langem in Verwendung, um die von den Speisen herabtropfenden Gargutsäfte aufzufangen und abzuleiten, damit sie nicht auf die Erwärmungseinrichtung gelangen und dort verbrennen können, da sonst die bei der Verbrennung sich ausbildenden Dämpfe das Gargut mit krebserregenden Substanzen kontaminieren würden.

Die Ablaufrinnen befinden sich dabei selbst unmittelbar oberhalb der Erwärmungseinrichtung und bedürfen daher einer zusätzlichen Kühlung, da die auf den Rinnen ablaufenden Gargutsäfte sonst überhitzt und verbrannt werden könnten und dadurch wiederum zur Entstehung von krebsfördernden Stoffmengen beitragen würden.

Die meisten bekannten, diesem Zweck dienenden Kühlvorrichtungen sind sehr aufwendig gestaltet und erfordern eine Zwangsbewegung des Kühlmittels.

Aufgabe der Erfindung ist es daher, eine Vorrichtung der eingangs genannten Art anzugeben, mit der auf technisch einfach Weise eine Überhitzung der auf die Ablaufrinnen herabtropfenden Gargutsäfte vermeidbar ist.

Dies wird erfindungsgemäß dadurch erreicht, daß zwischen der Einrichtung zur Erwärmung der Luft und den Ablaufrinnen jeweils zumindest eine Vorrichtung zur Umlenkung der von der Einrichtung zur Erwärmung in Richtung zu den Ablaufrinnen aufsteigenden, erwärmten Luft angeordnet ist.

Damit werden jene Anteile der aufsteigenden, erwärmten Luft, die sonst direkt in Wärmekontakt mit den Ablaufrinnen gelangen und diese erhitzen würden von den Ablaufrinnen weg und zwischen diesen hindurch geleitet. Durch das Umlenken der Wärmeströmung kann auf eine direkte Kühlung der Ablaufrinnen verzichtet werden oder zumindest treten auf den Ablaufrinnen so geringe Übertemperaturen auf, daß diese mit einfachen Kühlmaßnahmen herabgesetzt werden können. Weiters kann durch die horizontale Anordnung der Umlenkungsvorrichtung bei geneigter Anordnung der Hohlprofile verhindert werden, daß die aufsteigende erwärmte Luft entlang der Hohlprofile nach oben geleitet wird und es somit an der höchstgelegenen Stelle der Hohlprofile zu einer viel stärkeren Erwärmung kommt als an den darunter gelegenen Stellen der geneigten Hohlprofile. Dadurch wird eine Vergleichmäßigung des Temperaturverlaufes erzielt, sodaß das zu garende Gut nicht unterschiedlich stark erwärmt wird.

In weiterer Ausbildung der Erfindung kann vorgesehen sein, daß die Vorrichtung zur Umlenkung der erwärmten Luft aus jeweils parallel zur Längsrichtung der Ablaufrinnen unterhalb derselben verlaufenden Profilblechen gebildet ist.

Die Profilbleche sind somit direkt zwischen der Erwärmungseinrichtung und den Ablaufrinnen angeordnet und lenken die aufsteigende, warme Luft von der Unterseite der Ablaufrinnen weg, sodaß diese ihren Weg zum Gargut zwischen den voneinander beabstandeten Ablaufrinnen nehmen kann.

Gemäß einem weiteren Ausführungsbeispiel der Erfindung kann vorgesehen sein, daß die Profilbleche - im Querschnitt gesehen - in Form einer entlang ihrer Hauptachse geteilten Halbellipse ausgebildet sind, wobei der konkave Teil der Halbellipse jeweils den Ablaufrinnen zugewandt ist.

Das auf diese Weise stromlinienförmig gestaltete Profilblech ermöglicht eine sehr wirkungsvolle Umlenkung der von der Erwärmungseinrichtung aufsteigenden, erwärmten Luft.

Um eine möglichst vollständige Umlenkung der aufsteigenden, erwärmten Luft zu erzielen, können die Profilbleche sich jeweils - im Querschnitt gesehen - zumindest über die gesamte Breite der Ablaufrinnen erstrecken.

Wie bereits vorstehend angesprochen, ermöglicht es die Umlenkungsvorrichtung die aufsteigende erwärmte Luft zumindest teilweise von den Ablaufrinnen fernzuhalten und damit eine meßbare Herabsetzung der Rinnentemperatur zu erreichen. Um eine zusätzliche Kühlung zu erzielen, kann gemäß einer weiteren Ausführungsform der Erfindung vorgesehen sein, daß an der Unterseite der Ablaufrinnen jeweils von einem Kühlmittel, z.B. Luft oder Wasser, durchströmbare Hohlprofile ausgebildet sind. Das durch die Hohlprofile leitbare Kühlmittel sichert die Einhaltung einer relativ niedrigen Ablaufrinnentemperatur auch bei lang andauerndem Betrieb der erfindungsgemäßen Zubereitungsvorrichtung.

Besonders bevorzugt hat sich eine Ausbildung der Erfindung herausgestellt, bei der vorgesehen sein kann, daß die Hohlprofile jeweils aus einem Grundprofil bestehend aus - im Querschnitt gesehen - V-förmig angeordneten Bodenwänden und seitlich anschließenden, vertikalen Wänden gebildet sind, und daß die einen V-förmigen Querschnitt aufweisenden Ablaufrinnen auf die vertikalen Wände des Grundprofils aufgesetzt sind.

Wenn die Hohlprofile gemäß einer weiteren Ausführungsform der Erfindung aus einem Wärmedämmmaterial gebildet sind, wird eine weitere Herabsetzung der auf der Ablaufrinne vorherrschenden Temperatur bewirkt.

In weiterer Ausbildung der Erfindung kann das Wärmedämmmaterial aus einem Keramikfasermaterial gebildet sein, das eine besonders niedrige Wärmeleitfähigkeit aufweist.

Damit Teilchen von der rauhen bzw. faserigen Oberfläche der Hohlprofile nicht in das Gargut gelangen, können die Hohlprofile vollständig ummantelt sein, wobei die Ummantelung vorzugsweise zumindest teilweise aus einem Metall bzw. einer Metalllegierung, Email, einem Glas oder einer Glasmischung, oder einem temperaturbeständigen Kunststoff, z.B. Teflon o.ä., gebildet ist.

Zur Erzielung einer wirkungsvollen Kühlmittelbewegung können die Hohlprofile mit den aufgesetzten Ablaufrinnen an einem stimseitigen Ende über einen Verbindungskanal mit einer Vorrichtung zur Ausbildung einer Kühlmittelströmung unter Ausnutzung einer in der Zubereitungsvorrichtung entstehenden Druckdifferenz, vorzugsweise eine Saugzugvorrichtung, in Verbindung stehen, und das gegenüberliegende andere stirnseitige Ende offen sein.

Durch die dabei verwendete Vorrichtung zur Ausbildung einer Kühlmittelströmung kann auf externe Energiequellen zur Kühlmittelbewegung verzichtet werden.

Gemäß einer weiteren Ausführungsform der Erfindung kann vorgesehen sein, daß die Erwärmungseinrichtung aus mehreren, vorzugsweise stabförmigen, Gasbrennern gebildet ist, deren Gas-Zuleitungen sich durch die zugeordneten Verbindungskanäle hindurcherstrecken, wobei in der Gas-Zuleitung innerhalb des Verbindungskanals eine die Saugzugvorrichtung ausbildende Luft-Ansaugöffnung vorgesehen ist.

Das in die Erwärmungseinrichtung einströmende Gas saugt über die Luft-Ansaugöffnung der Gaszuleitung Luft an und erzeugt dabei eine Luftströmung, welche durch die Hohlprofile geleitet wird und dort eine Abkühlung derselben bewirkt.

In weiterer Ausbildung der Erfindung können die Gasbrenner entlang ihrer Länge jeweils voneinander beabstandete Gas-Austrittsdüsen aufweisen, wodurch ein über die gesamte Länge der Gasbrenner sehr gleichmäßiges Ausströmen des Gases sichergestellt ist.

Eine besonders vorteilhafte Wärmeverteilung läßt sich mit den Gasbrennern dann erzielen, wenn die stabförmigen Gasbrenner sich gemäß einem weiteren Ausführungsbeispiel der Erfindung parallel zu den Hohlprofilen und Ablaufrinnen erstrecken.

Eine weitere Variante der Erfindung kann darin bestehen, daß die Erwärmungseinrichtung aus einem Brennraum zur Befüllung mit Holzkohle und die Vorrichtung zur Ausbildung einer Kühlmittelströmung durch eine Luftzuführungsöffnung in den Brennraum gebildet ist. Die bei der Verbrennung der Holzkohle von außen angesaugte Luft durchströmt dabei vorher die Hohlprofile und erreicht dabei eine meßbare Herabsetzung der Gargutsafttemperatur.

Zur einfacheren Herstellung der Hohlprofile können in weiterer Ausbildung der Erfindung die Hohlprofile zweiteilig ausgebildet sein.

Gemäß einer weiteren Ausbildung der Erfindung kann vorgesehen sein, daß die Hohlprofile jeweils aus einem Grundprofil bestehend aus - im Querschnitt gesehen - zwei voneinander beabstandeten, V-förmigen Querschnitt aufweisenden Querstegen und zwei seitlich anschließenden, vertikalen Wänden sowie einer auf die Wände des Grundprofils aufgesetzten, V-förmigen Querschnitt aufweisenden Ablaufrinne gebildet sind.

Auf diese Weise lassen sich die kammerartig unterteilten Hohlprofile auf einfache Weise herstellen, wobei die Ablaufrinne aus einem anderen Material gebildet sein kann, so daß dieses vor allem einen guten Wärmekontakt zwischen der kühlenden Luft und den Gargutsäften ermöglicht.

Um die von der Erwärmungseinrichtung aufsteigende warme Luft an der Überhitzung der Hohlprofile zu hindern, können die Hohlprofile aus einem Wärmedämmmaterial gebildet sein.

In weiterer Ausbildung der Erfindung kann das Wärmedämmmaterial aus einem Keramikfasermaterial gebildet sein, das eine besonders niedrige Wärmeleitfähigkeit aufweist.

Damit Teilchen von der rauhen bzw. faserigen Oberfläche der Hohlprofile nicht in das Gargut gelangen, können die Hohlprofile vollständig ummantelt sein, wobei die Ummantelung vorzugsweise zumindest teilweise aus einem Metall bzw. einer Metalllegierung, Email, einem Glas oder einer Glasmischung, oder einem temperaturbeständigen Kunststoff, z.B. Teflon o.ä., gebildet ist.

Zur Erzielung einer wirkungsvollen Kühlmittelbewegung können die Hohlprofile mit den aufgesetzten Ablaufrinnen an einem stirnseitigen Ende über einen Verbindungskanal mit einer Vorrichtung zur Ausbildung einer Kühlmittelströmung unter Ausnutzung einer in der Zubereitungsvorrichtung entstehenden Druckdifferenz, vorzugsweise eine Saugzugvorrichtung, in Verbindung stehen, und das gegenüberliegende andere stirnseitige Ende offen sein.

Nachfolgend wird die Erfindung anhand des in der Zeichnung dargestellten Ausführungsbeispiels eingehend erläutert. Es zeigt dabei
Fig. 1 eine Ausführungsform der erfindungsgemäßen Vorrichtung im Schrägriß;
Fig.2 einen Schnitt AA durch die Vorrichtung gemäß Fig.1;
Fig.3 einen Schnitt BB durch die Vorrichtung gemäß Fig.1;
Fig.4 einen Schnitt CC durch die Vorrichtung gemäß Fig. 1;
Fig.5 eine weitere Ausführungsform der erfindungsgemäßen Vorrichtung im Schrägriß;
Fig.6 einen Schnitt AA durch die Vorrichtung gemäß Fig.5 und
Fig.7 einen Schnitt BB durch die Vorrichtung gemäß Fig.5.

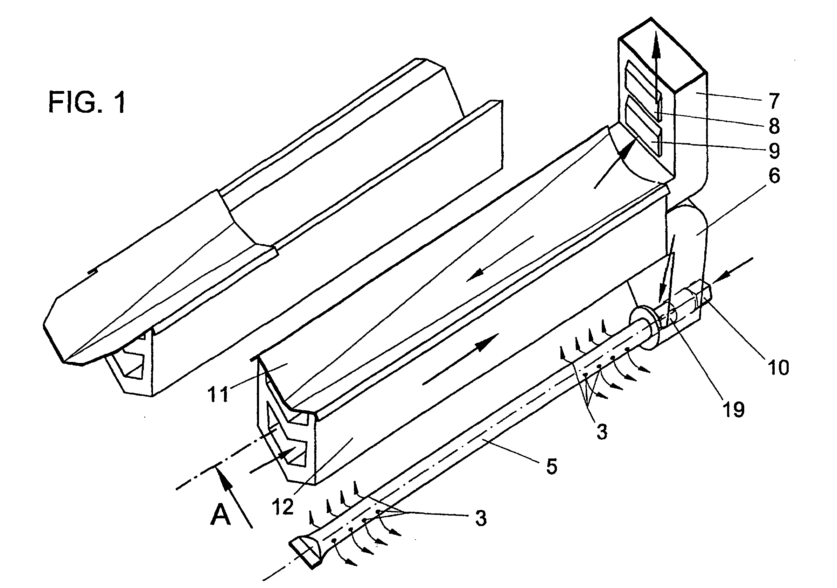

In Fig.1 sind Teile einer Vorrichtung zur Zubereitung von Speisen, wie z.B. eine Grill- bzw. Backeinrichtung im Schrägriß gezeigt, die eine Einrichtung zur Erwärmung von Luft 5 umfaßt, welche in diesem Ausführungsbeispiel aus mehreren stabförmigen, Gasbrennern 5 gebildet ist, von denen in Fig. 1 eine dargestellt ist.

Die Einrichtung zur Erwärmung der Luft kann auch zur Verbrennung von festen Brennstoffen geeignet sein. So kann ein Rost vorgesehen sein, auf dem Holzkohle verbrennbar ist.

Oberhalb der Einrichtung zur Erwärmung der Luft sind von einem Kühlmittel durchströmbare Hohlprofile 11, 12 angeordnet, deren Oberseiten rinnenförmig ausgebildet sind und Ablaufrinnen 11 für die Gargutsäfte der Speisen bilden.

Die Hohlprofile sind - in Gebrauchslage gesehen - horizontal angeordnet und die Ablaufrinnen 11 gegen die Horizontale geneigt angeordnet. An den Längsseiten der Ablaufrinnen sind Abtropfkanten ausgebildet, die ein seitliches Herabrinnen auf die Lufterwärmungseinrichtung verhindern.

Die stabförmigen Gasbrenner 5 weisen entlang ihrer Länge jeweils voneinander beabstandete Gas-Austrittsdüsen 3 auf und erstrecken sich parallel zu den Hohlprofilen 12, 11.

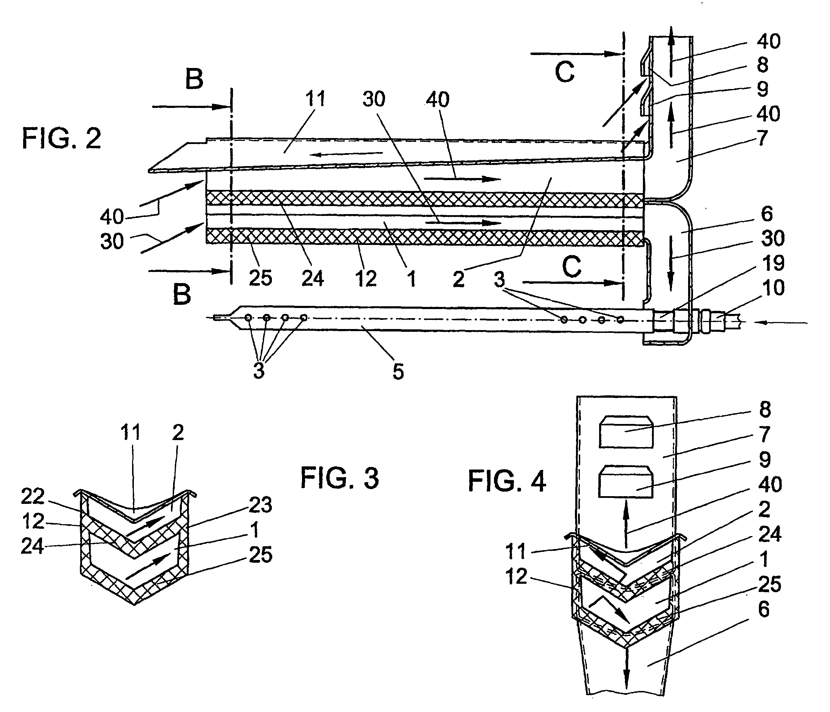

Erfindungsgemäß ist nun vorgesehen, daß der Hohlraum innerhalb der Hohlprofile 11, 12 jeweils aus zumindest einer, in Fig.1 aus zwei, in Längsrichtung der Hohlprofile 11, 12 durchgehend verlaufenden Kammern 1, 2 (Fig.2) gebildet ist, wobei die Kammern 1, 2 mittels einer Vorrichtung zur Ausbildung einer Kühlmittelströmung 7, 19 unter Ausnutzung einer in der Zubereitungsvorrichtung entstehenden Druckdifferenz von Kühlmittel durchströmbar sind. Diese Kühlmittelströmungsvorrichtung ist in dem gezeigten Ausführungsbeispiel durch zwei Saugzugvorrichtungen 7, 19 gebildet, es kann an deren Stelle aber auch eine nicht auf Saugzug sondern auf Druck basierende Strömungsvorrichtung vorgesehen sein.

Bevorzugt ist dabei als Kühlmittel ein Gas, vorzugsweise Luft, verwendbar, es kann aber auch eine Flüssigkeit, wie z.B. Wasser, zur Kühlung der Hohlprofile eingesetzt werden.

Die auf der erfindungsgemäßen Vorrichtung zuzubereitenden Speisen rufen während ihrer Erwärmung Gargutsäfte hervor, die auf die Erwärmungseinrichtung tropfen würden und dort krebserregende Stoffe entstehen ließen. Zu diesem Zweck sind auf den Hohlprofilen 12 die V-förmigen Ablaufrinnen 11 ausgebildet, die die herabtropfenden Säfte auffangen und in Längsrichtung ableiten. Damit die Hohlprofile selbst nicht auf eine die Gargutsäfte überhitzende Temperatur erwärmt werden, sind sie von einem Kühlmittel durchströmbar, das die Hohlprofiltemperatur soweit herabsetzt, daß die Gargutsäfte nicht verschmoren.

Die kühlende Funktion der beiden Kammern 1, 2 ist in Fig.2 besonders deutlich zu erkennen. Die unterhalb der Kammer 2 verlaufende Kammer 1 steht an einem stirnseitigen Ende über einen Verbindungskanal 6 mit der als Ansaugöffnung 19 ausgebildeten Saugzugvorrichtung in Verbindung, wobei das dem einen Ende gegenüberliegende andere Ende der Kammer 1 offen ausgebildet ist, sodaß über dieses offene Ende Luft aus der Umgebung angesaugt werden kann. Für geringere Kühlwirkung reicht die Kammer 1 allein aus, sodaß die Kammer 2 auch weggelassen werden kann. Die Saugwirkung der Ansaugöffnung 19 ergibt sich aus dem Gasstrom, der über die durch den Verbindungskanal 6 hindurchgeführte Gas-Zuleitung 10 in den stabförmigen Brenner 5 geleitet wird. Durch den an der Ansaugöffnung 19 ausgebildeten Unterdruck wird eine durch Pfeile 30 angedeutete Luftströmung erzeugt, die sich in der in der Gas-Zuleitung 10 ausgebildeten Ansaugöffnung 19 mit dem Gasstrom vermischt und dadurch den für eine gute Verbrennung erforderlichen Sauerstoff zur Verfügung stellt. Die Luftströmung 30 bewirkt aber zugleich auch die Kühlung der Hohlprofile 11, 12, da die von der Umgebung stammende Luft durch die untere Kammer 1 hindurchgezogen wird und die Hohlprofile 11, 12 dabei abkühlt.

Um den Kühleffekt weiter zu erhöhen, ist im Ausführungsbeispiel gemäß Fig. 1 eine weitere Kammer 2 vorgesehen, durch die ebenfalls kühle Umgebungsluft durch die Hohlprofile 11, 12 geleitet werden kann. Die Kammer 2 kann unter Weglassung der Kammer 1 auch allein betrieben werden.

Die Saugzugvorrichtung ist dabei jeweils aus einem kaminartigen - in Gebrauchslage - sich nach oben erstreckenden Abzugskanal 7 gebildet, der mit der Kammer 2 an ihrem einen stirnseitigen Ende verbunden ist. An ihrem gegenüberliegenden anderen Ende ist die Kammer 2 offen. Über dieses offene Ende kann kühle Umgebungsluft durch die Kammer 2 des Hohlprofils angesaugt und durch diese hindurchgeführt werden. Die Saugwirkung entsteht aus der Druckdifferenz, die sich durch die Kaminhöhe einstellt. Je höher der kaminartige Kanal 7 sich nach oben erstreckt, um so stärker wird Luft angesaugt.

Zur Erhöhung der Ansaugwirkung ist der kaminartige, einen rechteckförmigen Querschnitt aufweisende Abzugskanal 7 mit seitlich angebrachten Lufteinlaßschlitzen 8, 9 versehen, über die die von der Erwärmungseinrichtung aufsteigende warme Luft in den Abzugskanal gelangt, welche aufgrund ihrer geringen spezifischen Dichte ebenfalls eine Sogwirkung auf die aus der Kammer 2 anströmende Luftströmung 40 erzeugt.

Die Kammer 2 oder auch beide Kammern 1, 2 können zusätzlich mit einer nicht dargestellten Vorrichtung zur Zwangskühlung, z.B. einem Luft-Ventilator, einer Kühlmittelpumpe od. dgl., verbunden sein. Damit kann zusätzlich zu der durch Druckdifferenz entstehenden Kühlmittelströmung eine Zwangskühlung erreicht werden, die bei nicht ausreichender Kühlleistung eingeschaltet werden kann.

Anstelle der Gasbrenner kann aber auch eine herkömmliche Holzkohlenverbrennung oder eine ähnliche Verbrennung zur Erwärmung des Gargutes verwendet werden. Die Erwärmungseinrichtung kann dabei aus einem Brennraum zur Befüllung mit Holzkohle und die Ansaugöffnung durch eine Luftzuführungsöffnung für die Primärluftzufuhr in den Brennraum zum Abbrand von Holzkohle gebildet sein. Sobald der Verbrennungsvorgang beginnt, wird über die Luftzuführüngsöffnung Luft angesaugt, die zuvor die Hohlprofile durchströmt und diese dabei abgekühlt.

In dem Ausführungsbeispiel gemäß Fig. 1 bis 4 sind zwei übereinanderliegend angeordnete Kammern 1, 2 innerhalb der Hohlprofile ausgebildet, - wie vorstehend bereits erwähnt - könnten jedoch auch nur eine oder aber auch mehrere Kammern dieser Art vorgesehen sein.

Wie aus Fig.3 zu erkennen ist, sind die Hohlprofile 12, 11 zweiteilig ausgebildet.

Dabei ist jedes Hohlprofil jeweils aus einem Grundprofil 12, bestehend aus - im Querschnitt gesehen - zwei voneinander beabstandeten, V-förmigen Querschnitt aufweisenden Querstegen 24, 25 und zwei seitlich anschließenden, vertikalen Wänden 22, 23 sowie einer auf die Wände 22, 23 des Grundprofils 12 aufgesetzten, V-förmigen Querschnitt aufweisenden Ablaufrinne 11 gebildet. Die Ablaufrinne 11 deckt den offenen Teil des Grundprofils so ab, daß die obere Kammer 2 geschlossen ist. Die Kammern 1, 2 können aber auch auf beliebig andere Art ausgebildet sein. Die Hohlprofile 11, 12 können aus einem Wärmedämmmaterial gebildet sein, sodaß die durch Strahlung und Konvektion von der Erwärmungseinrichtung abgegebene Wärme vom Inneren der Hohlprofile 11, 12 abgehalten wird.

Dadurch können die an der Unterseite der Hohlprofile 12 herrschenden hohen Temperaturen im Bereich von 400°C bis 650°C auch nicht zu den Ablaufrinnen 11 vordringen, sodaß die Gargutsäfte nur mehr mit unter 120°C heißen Flächen in Berührung kommen und ein Verbrennen derselben verhindert wird.

Das Wärmedämmmaterial ist vorzugsweise aus einem Keramikfasermaterial gebildet, das z.B. eine Wärmeleitzahl im Bereich von 0,08 W/mK bei 400°C bis 0,23 W/mK bei 1000°C aufweist. Diese Werte werden von einem unter der Bezeichnung Form 612™ erhältlichen Keramikfasermaterial erfüllt, das hochtemperaturbeständige Glasfasern beinhaltet, die ZrO₂, CaO, MgO, SiO₂ und Al₂O₃ enthalten. Es kann aber auch jedes andere geeignete Wärmedämmmaterial zur Ausbildung der Hohlprofile verwendet werden.

Um die rauhe Oberfläche des Wärmedämmmaterials zu verkleiden und damit die hygienischen Bedingungen zu verbessern, kann eine vollständige Ummantelung der Hohlprofile vorgesehen werden, die je nach Anwendungsfall aus einem Metall bzw. einer Metalllegierung, einer Emailschicht oder einer Glas- bzw. Glasmischung gebildet ist. Eine weitere Möglichkeit, das Keramikfasermaterial zu ummanteln besteht in der Verwendung von temperaturstabilen Kunststoffen wie Teflon o.ä.. Die Ummantelung trägt zur Erhöhung der Wärmeleitfähigkeit bei und sollte daher möglichst dünn, z.B. einige 100 µm, gewählt werden.

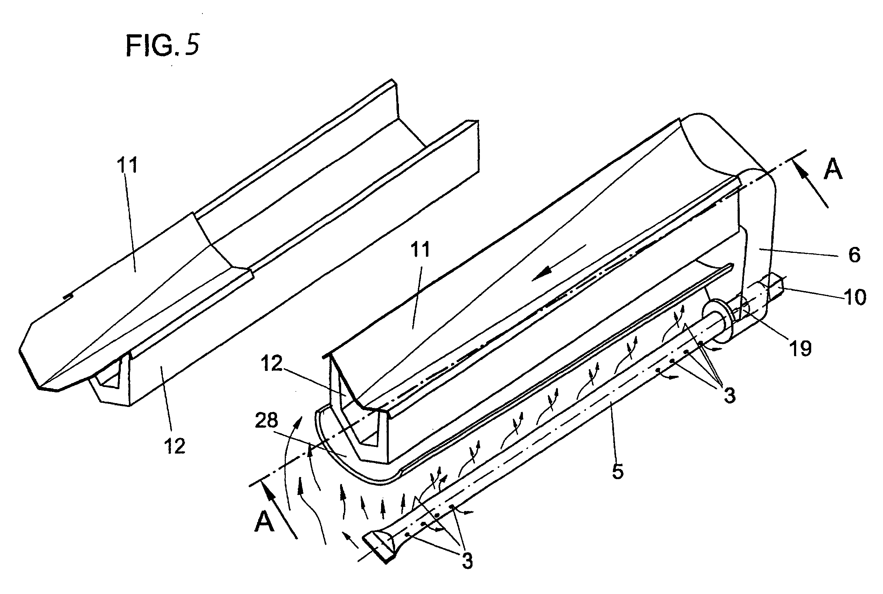

In Fig.5 sind Teile einer weiteren Ausführungsform der erfindungsgemäßen Vorrichtung zur Zubereitung von Speisen, wie z.B. eine Grill- bzw. Backeinrichtung im Schrägriß gezeigt, die eine Einrichtung zur Erwärmung von Luft 5 umfaßt, welche in diesem Ausführungsbeispiel aus mehreren stabförmigen, Gasbrennern 5 gebildet ist, von denen in Fig.5 einer dargestellt ist.

Die Einrichtung zur Erwärmung der Luft kann wiederum auch zur Verbrennung von festen Brennstoffen geeignet sein. So kann ein Rost vorgesehen sein, auf dem Holzkohle verbrennbar ist.

Erfindungsgemäß ist zwischen der Einrichtung zur Erwärmung der Luft 5 und den Ablaufrinnen 11 jeweils eine Vorrichtung 28 zur Umlenkung der von der Einrichtung 5 zur Erwärmung in Richtung zu den Ablaufrinnen 11 aufsteigenden, erwärmten Luft angeordnet. Die Umlenkung der von den Brennern 5 aufsteigenden Luft kann auf mannigfache Art und mit den verschiedensten Mitteln geschehen, wie sie dem Fachmann auf dem Gebiet der Strömungstechnik geläufig sind. Es muß dabei jedenfalls vermieden werden, daß die warme Luft mit den Ablaufrinnen 11 in Kontakt tritt und diese auf eine Temperatur erhöht, welche ein Verbrennen bzw. Verschmoren der Gargutsäfte zur Folge haben könnte.

Die auf der erfindungsgemäßen Vorrichtung zuzubereitenden Speisen rufen während ihrer Erwärmung Gargutsäfte hervor, die auf die Erwärmungseinrichtung tropfen würden und dort krebserregende Stoffe entstehen ließen. Zu diesem Zweck sind auf den Hohlprofilen 12 die V-förmigen Ablaufrinnen 11 ausgebildet, die die herabtropfenden Säfte auffangen und in Längsrichtung ableiten. Damit die Hohlprofile selbst nicht auf eine die Gargutsäfte überhitzende Temperatur erwärmt werden, sind sie von einem Kühlmittel durchströmbar, das die Hohlprofiltemperatur soweit herabsetzt, daß die Gargutsäfte nicht verschmoren.

Zusätzlich zu der Umlenkung der erwärmten, aufsteigenden Luft sind an der Unterseite der Ablaufrinnen 11 jeweils von einem Kühlmittel durchströmbare Hohlprofile 12 ausgebildet, die verhindern helfen, daß die Ablaufrinnen bei längerer Betriebsdauer der erfindungsgemäßen Vorrichtung eine zu hohe Temperatur annehmen können. Die stabförmigen Gasbrenner 5 weisen entlang ihrer Länge jeweils voneinander beabstandete Gas-Austrittsdüsen 3 auf und erstrecken sich parallel zu den Hohlprofilen 12.

Die Herabsetzung der Temperatur soll soweit erfolgen, daß die auf die Ablaufrinne herabtropfenden Gargutsäfte nicht verschmoren und dabei krebserregende Partikel entstehen, die das Gargut kontaminieren.

Bevorzugt ist dabei als Kühlmittel ein Gas, vorzugsweise Luft, verwendbar, es kann aber auch eine Flüssigkeit, wie z.B. Wasser, zur Kühlung der Hohlprofile eingesetzt werden.

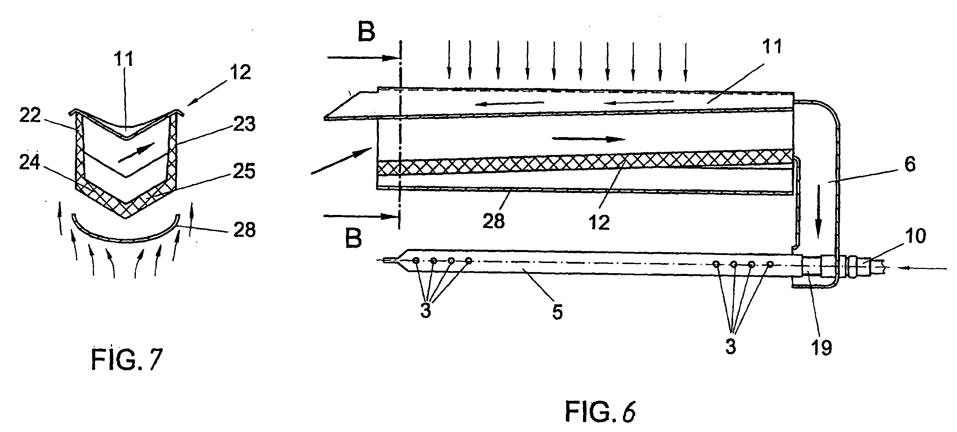

Die Vorrichtung zur Umlenkung der erwärmten Luft ist gemäß Fig.5 bis 7 aus jeweils parallel zur Längsrichtung der Ablaufrinnen 11 unterhalb derselben verlaufenden Profilblechen 28 gebildet, die in bevorzugter Weise aus rostfreiem Stahl geformt sind. Im Querschnitte gesehen sind die Profilbleche 28 in Form einer entlang ihrer Hauptachse geteilten Halbellipse ausgebildet, wobei der konkave Teil der Halbellipse jeweils den Ablaufrinnen 11 zugewandt ist (Fig. 7).

Die Profilbleche 28 erstrecken sich jeweils - im Querschnitt gesehen - über die gesamte Breite der Ablaufrinnen 11 und reichen sogar über diese hinaus, um die aufsteigende Luft wirkungsvoll von den Ablaufrinnen 11 fernzuhalten.

Die in Fig.5 bis 7 gezeigten Hohlprofile sind jeweils aus einem Grundprofil 12 bestehend aus - im Querschnitt gesehen - V-förmig angeordneten Bodenwänden 24, 25 und seitlich anschließenden, vertikalen Wänden 22, 23 gebildet, wobei die einen V-förmigen Querschnitt aufweisenden Ablaufrinnen 11 auf die vertikalen Wände 22, 23 des Grundprofils 12 aufgesetzt sind.

Die Hohlprofile 12 sind vorzugsweise aus einem Wärmedämmmaterial gebildet, sodaß eine Weiterleitung von der an die Hohlprofile abgegebenen Wärme an die Ablaufrinnen 11 nur in sehr geringem Ausmaß stattfindet. Dadurch werden die an der Unterseite der Hohlprofile 12 herrschenden hohen Temperaturen im Bereich von 400°C bis 650°C von den Ablaufrinnen 11 abgehalten, sodaß die Gargutsäfte nur mehr mit unter 120°C heißen Flächen in Berührung kommen und ein Verbrennen derselben verhindert wird.

Das Wärmedämmmaterial ist vorzugsweise aus einem Keramikfasermaterial gebildet, das z.B. eine Wärmeleitzahl im Bereich von 0,08 W/mK bei 400°C bis 0,23 W/mK bei 1000°C aufweist. Diese Werte werden von einem unter der Bezeichnung Form 612™ erhältlichen Keramikfasermaterial erfüllt, das hochtemperaturbeständige Glasfasern beinhaltet, die ZrO₂, CaO; MgO, SiO₂ und Al₂O₃ enthalten. Es kann aber auch jedes andere geeignete Wärmedämmmaterial zur Ausbildung der Hohlprofile verwendet werden.

Um die rauhe Oberfläche des Wärmedämmmaterials zu verkleiden und damit die hygienischen Bedingungen zu verbessern, kann eine vollständige Ummantelung der Hohlprofile vorgesehen werden, die je nach Anwendungsfall aus einem Metall bzw. einer Metalllegierung, einer Emailschicht oder einer Glas- bzw. Glasmischung gebildet ist. Eine weitere Möglichkeit, das Keramikfasermaterial zu ummanteln besteht in der Verwendung von temperaturstabilen Kunststoffen wie Teflon o.ä.. Die Ummantelung trägt zur Erhöhung der Wärmeleitfähigkeit bei und sollte daher möglichst dünn, z.B. einige 100 µm, gewählt werden.

Wie insbesondere aus Fig.6 zu ersehen ist, dienen die Hohlprofile 12 der Hindurchleitung von Luft, um eine zusätzliche Kühlung der Ablaufrinnen 11 zu ermöglichen.

Zu diesem Zweck stehen die Hohlprofile 12 wie im Ausführungsbeispiel gemäß Fig. 1 bis 4 mit den aufgesetzten Ablaufrinnen 11 an einem stirnseitigen Ende über je einen Verbindungskanal 6 mit der Saugzugvorrichtung 19 in Verbindung, während das jeweils gegenüberliegende andere stirnseitige Ende offen ist.

Anstelle der Gasbrenner kann wiederum auch eine herkömmliche Holzkohlenverbrennung oder eine ähnliche Verbrennung zur Erwärmung des Gargutes verwendet werden. Die Erwärmungseinrichtung kann dabei aus einem Brennraum zur Befüllung mit Holzkohle und die Vorrichtung zur Ausbildung einer Kühlmittelströmung durch eine Luftzufühmngsöffnung in den Brennraum gebildet sein.

## Patentansprüche

1. Vorrichtung zur Zubereitung von Speisen, wie z.B. eine Grill- bzw. Backeinrichtung, mit einer Einrichtung zur Erwärmung der Luft und gegebenenfalls einem Rost, wobei oberhalb der Einrichtung zur Erwärmung der Luft von einem Kühlmittel durchströmbare Hohlprofile angeordnet sind, deren Oberseiten rinnenförmig ausgebildet sind und Ablaufrinnen für die Gargutsäfte der Speisen bilden, **dadurch gekennzeichnet, daß** der Hohlraum innerhalb der Hohlprofile (11, 12) jeweils zumindest aus einer, vorzugsweise zwei, in Längsrichtung der Hohlprofile (11, 12) durchgehend verlaufenden Kammer(n) (1, 2) gebildet ist, wobei die Kammer(n) (1, 2) mittels zumindest einer Vorrichtung zur Ausbildung einer Kühlmittelströmung unter Ausnutzung einer in der Zubereitungsvorrichtung entstehenden Druckdifferenz (7, 19) von Kühlmittel durchströmbar ist bzw. sind.

2. Vorrichtung nach Anspruch 1, **dadurch gekennzeichnet, daß** das Kühlmittel ein Gas, vorzugsweise Luft, ist.

3. Vorrichtung nach Anspruch 1 oder 2, **dadurch gekennzeichnet, daß** die Vorrichtung zur Ausbildung einer Kühlmittelströmung durch eine Saugzugvorrichtung (7, 19) gebildet ist.

4. Vorrichtung nach Anspruch 3, **dadurch gekennzeichnet, daß** die Saugzugvorrichtung jeweils durch eine Ansaugöffnung (19) der Erwärmungseinrichtung (5) gebildet ist, daß die oder eine der Kammern (1) der Hohlprofile (11, 12) an einem stirnseitigen Ende über einen Verbindungskanal (6) mit der Ansaugöffnung (19) in Verbindung stehen, und daß das gegenüberliegende andere stimseitige Ende der Kammer(n) (I) offen ist.

5. Vorrichtung nach Anspruch 4, **dadurch gekennzeichnet, daß** die Erwärmungseinrichtung aus mehreren, vorzugsweise stabförmigen, Gasbrennern (5) gebildet ist, deren Gas-Zuleitungen (10) sich durch die zugeordneten Verbindungskanäle (6) hindurcherstrecken, wobei in der Gas-Zuleitung innerhalb des Verbindungskanals (6) die Luft-Ansaugöffnung (19) ausgebildet ist.

6. Vorrichtung nach Anspruch 5, **dadurch gekennzeichnet, daß** der Gasbrenner (5) entlang seiner Länge jeweils voneinander beabstandete Gas-Austrittsdüsen (3) aufweist.

7. Vorrichtung nach Anspruch 5 oder 6, **dadurch gekennzeichnet, daß** die stabförmigen Gasbrenner (5) sich parallel zu den Hohlprofilen (12, 11) erstrecken.

8. Vorrichtung nach einem der vorhergehenden Ansprüche, **dadurch gekennzeichnet, daß** die Saugzugvorrichtung aus einem kaminartigen - in Gebrauchslage - sich nach oben erstreckenden Abzugskanal (7) gebildet ist, daß jeweils die oder eine der Kammern (2) der Hohlprofile (11, 12) an ihrem stirnseitigen Ende mit dem Abzugskanal (7) verbunden sind, der an seinem oberen Ende offen ist, und daß das gegenüberliegende andere stirnseitige Ende der Kammer (2) offen ist.

9. Vorrichtung nach Anspruch 8, **dadurch gekennzeichnet, daß** der kaminartige Abzugskanal (7) mit seitlich angebrachten Lufteinlaßschlitzen (8, 9) versehen ist.

10. Vorrichtung nach Anspruch 9, **dadurch gekennzeichnet, daß** der kaminartige Abzugskanal (7) einen rechteckförmigen Querschnitt aufweist.

11. Vorrichtung nach einem der vorhergehenden Ansprüche, **dadurch gekennzeichnet, daß** die Kammer(n) (1, 2) zusätzlich mit einer Vorrichtung zur Zwangskühlung, z.B. einem Luft-Ventilator, einer Kühlmittelpumpe od. dgl., verbunden ist bzw. sind.

12. Vorrichtung nach einem der vorhergehenden Ansprüche, **dadurch gekennzeichnet, daß** die Hohlprofile (11, 12) - in Gebrauchslage gesehen - horizontal angeordnet sind und die Ablaufrinnen (11) gegen die Horizontale geneigt angeordnet sind.

13. Vorrichtung nach einem der vorhergehenden Ansprüche, **dadurch gekennzeichnet, daß** zwei Kammern (1, 2) vorgesehen sind, die übereinanderliegend angeordnet sind.

14. Vorrichtung nach Anspruch 4, **dadurch gekennzeichnet, daß** die Erwärmungseinrichtung aus einem Brennraum zur Befüllung mit Holzkohle und die Ansaugöffnung durch eine Luftzuführungsöffnung für die Primärluftzufuhr in den Brennraum zum Abbrand von Holzkohle gebildet ist.

15. Vorrichtung zur Zubereitung von Speisen, wie z.B. eine Grill- bzw. Backeinrichtung, mit einer Einrichtung zur Erwärmung der Luft und gegebenenfalls einem Rost, wobei oberhalb der Einrichtung zur Erwärmung der Luft mehrere, vorzugsweise in einer Ebene angeordnete, voneinander beabstandete Ablaufrinnen für die Gargutsäfte der Speisen vorgesehen sind, **dadurch gekennzeichnet, daß** zwischen der Einrichtung zur Erwärmung der Luft (5) und den Ablaufrinnen (11) jeweils zumindest eine Vorrichtung (28) zur Umlenkung der von der Einrichtung zur Erwärmung (5) in Richtung zu den Ablaufrinnen (11) aufsteigenden, erwärmten Luft angeordnet ist.

16. Vorrichtung nach Anspruch 15, **dadurch gekennzeichnet, daß** die Vorrichtung zur Umlenkung der erwärmten Luft aus jeweils parallel zur Längsrichtung der Ablaufrinnen (11) unterhalb derselben verlaufenden Profilblechen (28) gebildet ist.

17. Vorrichtung nach Anspruch 16, **dadurch gekennzeichnet, daß** die Profilbleche (28) - im Querschnitt gesehen - in Form einer entlang ihrer Hauptachse geteilten Halbellipse ausgebildet sind, wobei der konkave Teil der Halbellipse jeweils den Ablaufrinnen (11) zugewandt ist.

18. Vorrichtung nach Anspruch 16 oder 17, **dadurch gekennzeichnet, daß** die Profilbleche (28) sich jeweils - im Querschnitt gesehen - zumindest über die gesamte Breite der Ablaufrinnen (11) erstrecken.

19. Vorrichtung nach Anspruch 16, 17 oder 18, **dadurch gekennzeichnet, daß** an der Unterseite der Ablaufrinnen (11) jeweils von einem Kühlmittel, z.B. Luft oder Wasser, durchströmbare Hohlprofile (12) ausgebildet sind.

20. Vorrichtung nach Anspruch 19, **dadurch gekennzeichnet, daß** die Hohlprofile jeweils aus einem Grundprofil (12) bestehend aus - im Querschnitt gesehen - V-förmig angeordneten Bodenwänden (24, 25) und seitlich anschließenden, vertikalen Wänden (22, 23) gebildet sind, und daß die einen V-förmigen Querschnitt aufweisenden Ablaufrinnen (11) auf die vertikalen Wände (22, 23) des Grundprofils (12) aufgesetzt sind.

21. Vorrichtung nach Anspruch 19 oder 20, **dadurch gekennzeichnet, daß** die Hohlprofile (12) aus einem Wärmedämmmaterial gebildet sind.

22. Vorrichtung nach Anspruch 21, **dadurch gekennzeichnet, daß** das Wärmedämmmaterial aus einem Keramikfasermaterial gebildet ist.

23. Vorrichtung nach Anspruch 21 und 22, **dadurch gekennzeichnet, daß** die Hohlprofile (12) vollständig ummantelt sind, wobei die Ummantelung vorzugsweise zumindest teilweise aus einem Metall bzw. einer Metalllegierung, Email, einem Glas oder einer Glasmischung, oder einem temperaturbeständigen Kunststoff, z.B. Teflon o.ä., gebildet ist.

24. Vorrichtung nach einem der Ansprüche 19 bis 23, **dadurch gekennzeichnet, daß** die Hohlprofile (12) mit den aufgesetzten Ablaufrinnen (11) an einem stirnseitigen Ende über einen Verbindungskanal (6) mit einer Vorrichtung zur Ausbildung einer Kühlmittelströmung unter Ausnutzung einer in der Zubereitungsvorrichtung entstehenden Druckdifferenz, vorzugsweise eine Saugzugvorrichtung (19), in Verbindung stehen, und daß das gegenüberliegende andere stirnseitige Ende offen ist.

25. Vorrichtung nach Anspruch 24, **dadurch gekennzeichnet, daß** die Erwärmungseinrichtung aus mehreren, vorzugsweise stabförmigen, Gasbrennern (5) gebildet ist, deren Gas-Zuleitungen (10) sich durch die zugeordneten Verbindungskanäle (6) hindurcherstrecken, wobei in der Gas-Zuleitung innerhalb des Verbindungskanals (6) eine die Saugzugvorrichtung ausbildende Luft-Ansaugöffnung (19) vorgesehen ist.

26. Vorrichtung nach Anspruch 25, **dadurch gekennzeichnet, daß** die Gasbrenner (5) entlang ihrer Länge jeweils voneinander beabstandete Gas-Austrittsdüsen (3) aufweisen.

27. Vorrichtung nach Anspruch 25 oder 26, **dadurch gekennzeichnet, daß** die stabförmigen Gasbrenner (5) sich parallel zu den Hohlprofilen (12) und Ablaufrinnen (11) erstrecken.

28. Vorrichtung nach Anspruch 27, **dadurch gekennzeichnet, daß** die Erwärmungseinrichtung aus einem Brennraum zur Befüllung mit Holzkohle und die Vorrichtung zur Ausbildung einer Kühlmittelströmung durch eine Luftzuführungsöffnung in den Brennraum gebildet ist.

29. Vorrichtung nach einem der Ansprüche 19 bis 28, **dadurch gekennzeichnet, daß** die Hohlprofile (12, 11) zweiteilig ausgebildet sind.

30. Vorrichtung nach Anspruch 29, **dadurch gekennzeichnet, daß** die Hohlprofile jeweils aus einem Grundprofil (12) bestehend aus - im Querschnitt gesehen - zwei voneinander beabstandeten, V-förmigen Querschnitt aufweisenden Querstegen (24, 25) und zwei seitlich anschließenden, vertikalen Wänden (22, 23) sowie einer auf die Wände (22, 23) des Grundprofils (12) aufgesetzten, V-förmigen Querschnitt aufweisenden Ablaufrinne (11) gebildet sind.

31. Vorrichtung nach Anspruch 29 oder 30 , **dadurch gekennzeichnet, daß** die Hohlprofile (11, 12) aus einem Wärmedämmmaterial gebildet sind.

32. Vorrichtung nach Anspruch 31, **dadurch gekennzeichnet, daß** das Wärmedämmmaterial aus einem Keramikfasermaterial gebildet ist.

33. Vorrichtung nach Anspruch 31 und 32, **dadurch gekennzeichnet, daß** die Hohlprofile (12) vollständig ummantelt sind, wobei die Ummantelung vorzugsweise zumindest teilweise aus einem Metall bzw. einer Metalllegierung, Email, einem Glas oder einer Glasmischung, oder einem temperaturbeständigen Kunststoff, z.B. Teflon o.ä., gebildet ist.

## Claims

1. An apparatus for preparing food, e.g. a grilling or baking device, comprising a device for heating the air and optionally a grate, with hollow profiles being arranged above the device for heating the air, which hollow profiles can be flowed through by a coolant and whose upper sides are provided with a groove-like arrangement and form run-off grooves for the cooking juices of the food, **characterized in that** the hollow chamber within the hollow profiles (11, 12) is each formed from one, preferably two, chamber(s) (1, 2) extending continuously in the longitudinal direction of the hollow profiles (11, 12), with the chamber(s) (1, 2) being capable of being flowed through by coolant by means of at least one apparatus for forming a coolant flow by using a pressure difference (7, 19) arising in the preparation apparatus.

2. An apparatus as claimed in claim 1, **characterized in that** the coolant is a gas, preferably air.

3. An apparatus as claimed in claim 1 or 2, **characterized in that** the apparatus is formed by a suction-draught apparatus (7, 19) in order to form a coolant flow.

4. An apparatus as claimed in claim 3, **characterized in that** the suction-draught apparatus is formed by a suction opening (19) of the heating device (5), that the chamber (1), or any one thereof, of the hollow profiles (11, 12) is in connection with the suction opening (19) at one face end by way of a connecting conduit (6), and that the opposite other face end of the chamber(s) (1) is open.

5. An apparatus as claimed in claim 4, **characterized in that** the heating device is formed by several rod-like gas burners (5) whose gas feed lines (10) extend through the associated connecting conduits (6), with the air suction opening (19) being formed in the gas feed line within the connecting conduit (6).

6. An apparatus as claimed in claim 5, **characterized in that** the gas burner (5) comprises mutually spaced gas outlet nozzles (3) along its length.

7. An apparatus as claimed in claim 5 or 6, **characterized in that** the rod-like gas burners (5) extend parallel to the hollow profiles (12, 11).

8. An apparatus as claimed in one of the preceding claims, **characterized in that** the suction-draught apparatus is formed by a chimney-like and, in the used position, upwardly extending vent conduit (7), that the chambers (2), or one thereof, of the hollow profiles (11, 12) are connected at their face end with the vent conduit (7) which is open at its upper end, and that the opposite other face end of the chamber (2) is open.

9. An apparatus as claimed in claim 8, **characterized in that** the chimney-like vent conduit (7) comprises laterally provided air inlet slots (8, 9).

10. An apparatus as claimed in claim 9, **characterized in that** the chimney-like vent conduit (7) has a rectangular cross section.

11. An apparatus as claimed in one of the preceding claims, **characterized in that** the chamber(s) (1, 2) is/are additionally connected with an apparatus for forced cooling, e.g. an air fan, a coolant pump or the like.

12. An apparatus as claimed in one of the preceding claims, **characterized in that** the hollow profiles (11, 12) are arranged horizontally in the used position and the run-off grooves (11) are arranged so as to be inclined relative to the horizontal.

13. An apparatus as claimed in one of the preceding claims, **characterized in that** two chambers (1, 2) are provided which are arranged above one another.

14. An apparatus as claimed in claim 4, **characterized in that** the heating device is formed of a burner chamber for filling with charcoal and the suction opening is formed by an air feed opening for primary air supply to the burner chamber for incinerating charcoal.

15. An apparatus for preparing food, e.g. a grilling or baking device, comprising a device for heating the air and optionally a grate, with several mutually spaced run-off grooves for the cooking juices of the food being provided, which grooves are preferably arranged in one plane and are disposed above the device for heating the air, **characterized in that** at least one apparatus (28) for deflecting the heated air rising from the device for heating (5) in the direction towards the run-off grooves (11) is provided between the device for heating the air (5) and the run-off grooves (11).

16. An apparatus as claimed in claim 15, **characterized in that** the apparatus for deflecting the heated air is formed by profile sheets (28) extending parallel to the longitudinal direction of the run-off grooves (11) below the same.

17. An apparatus as claimed in claim 16, **characterized in that** the profile sheets (28) are arranged, when seen in the cross section, in the form of a hemi-ellipse divided along its main axis, with the concave part of the hemi-ellipse facing the run-off grooves (11).

18. An apparatus as claimed in claim 16 or 17, **characterized in that** the profile sheets (28) extend, when seen in the cross section, at least over the entire width of the run-off grooves (11).

19. An apparatus as claimed in claim 16, 17 or 18, **characterized in that** hollow profiles (12) are arranged on the lower side of the run-off grooves (11), which hollow profiles can each be flowed through by a coolant such as air or water.

20. An apparatus as claimed in claim 19, **characterized in that** the hollow profiles are formed from a basic profile (12) consisting of floor walls (24, 25) which, when seen in the cross section, are provided with a V-shaped arrangement, and laterally adjacent vertical walls (22, 23), and that the run-off grooves (11) having a V-shaped cross section are placed on the vertical walls (22, 23) of the basic profile (12).

21. An apparatus as claimed in claim 19 or 20, **characterized in that** the hollow profiles (12) are formed from a heat insulating material.

22. An apparatus as claimed in claim 21, **characterized in that** the heat insulating material is formed by a ceramic fibre material.

23. An apparatus as claimed in claim 21 and 22, **characterized in that** the hollow profiles (12) are completely encased, with the encasing preferably being formed at least partly by a metal or a metal alloy, enamel, glass or glass mixture, or a temperature-resistant plastic material such as Teflon or the like.

24. An apparatus as claimed in one of the claims 19 to 23, **characterized in that** the hollow profiles (12) with the inserted run-off grooves (11) are in connection at a face side end via a connecting conduit (6) with an apparatus for forming a coolant flow by using a pressure difference arising in the preparation apparatus, preferably a suction-draught apparatus (19), and that the opposite other face end is open.

25. An apparatus as claimed in claim 24, **characterized in that** the heating device is formed by several, preferably rod-like gas burners (5) whose gas feed lines (10) extend through the associated connecting conduits (6), with an air suction opening (19) being provided in the gas feed line within the connecting conduit (6), which opening forms the suction-draught apparatus.

26. An apparatus as claimed in claim 25, **characterized in that** the gas burners (5) comprise gas outlet nozzles (3) which are mutually spaced over the length of said gas burners.

27. An apparatus as claimed in claim 25 or 26, **characterized in that** the rod-like gas burners (5) extend parallel to the hollow profiles (12) and run-off grooves (11).

28. An apparatus as claimed in claim 27, **characterized in that** the heating device is formed by a burner chamber for filling with charcoal and the apparatus for forming the coolant flow is formed by an air supply opening in the burner chamber in order to form a coolant flow.

29. An apparatus as claimed in one of the claims 19 to 28, **characterized in that** the hollow profiles (12, 11) are provided with a two-part arrangement.

30. An apparatus as claimed in claim 29, **characterized in that** the hollow profiles are formed by a basic profile (12) consisting, as seen in the cross section, of two mutually spaced lateral bridges (24, 25) having a V-shaped cross section and two laterally adjacent vertical walls (22, 23), as well as a run-off groove (11) placed on the walls of the basic profile (12) and having a V-shaped cross section.

31. An apparatus as claimed in claim 29 or 30, **characterized in that** the hollow profiles (11, 12) are made of a heat insulating material.

32. An apparatus as claimed in claim 31, **characterized in that** the heat insulating material is formed by a ceramic fibre material.

33. An apparatus as claimed in claim 31 and 32, **characterized in that** the hollow profiles (12) are completely encased, with the encasing preferably being formed at least partly by a metal or a metal alloy, enamel, glass or glass mixture, or a temperature-resistant plastic material such as Teflon or the like.

## Revendications

1. Dispositif pour la préparation de plats, par exemple dispositif pour grillades ou pierrades, avec une installation pour le chauffage de l'air et éventuellement un grill, dans lequel il est prévu au-dessus de l'installation pour le chauffage de l'air des profilés creux pouvant être parcourus par un fluide de refroidissement et dont les faces supérieures sont conformées en forme de gouttière et forment des gouttières d'écoulement pour les sucs de cuisson des aliments, **caractérisé en ce que** l'espace creux à l'intérieur des profilés creux (11, 12) est formé par une au moins, de préférence deux chambre(s) (1, 2) orientées de façon continue dans le sens longitudinal des profilés creux (11, 12), la ou les chambre(s) (1, 2) pouvant être parcourue(s) par du fluide de refroidissement au moyen d'au moins un dispositif pour la création d'une circulation de fluide de refroidissement en utilisant la différence de pression (7, 19) qui se crée dans le dispositif de préparation.

2. Dispositif selon la revendication 1, **caractérisé en ce que** le fluide de refroidissement est un gaz, de préférence de l'air.

3. Dispositif selon la revendication 1 ou 2, **caractérisé en ce que** le dispositif pour la création d'une circulation de fluide de refroidissement est formé par un dispositif d'aspiration (7, 19).

4. Dispositif selon la revendication 3, **caractérisé en ce que** le dispositif d'aspiration est formé par une ouverture d'aspiration (19) de l'installation de chauffage (5), **en ce que** la chambre ou l'une des chambres (1) des profilés creux (11, 12) communique avec l'ouverture d'aspiration (19) à une extrémité frontale par un canal de communication (6), et **en ce que** l'autre extrémité frontale opposée de la chambre ou des chambres (1) est ouverte.

5. Dispositif selon la revendication 4, **caractérisé en ce que** l'installation de chauffage se compose de plusieurs brûleurs à gaz (5), de préférence en forme de barres, dont les conduites d'arrivée de gaz (10) traversent les canaux de communication (6) correspondants, l'ouverture d'aspiration de l'air (19) étant ménagée dans la conduite d'arrivée de gaz à l'intérieur du canal de communication (6).

6. Dispositif selon la revendication 5, **caractérisé en ce que** le brûleur à gaz (5) présente sur sa longueur des buses de sortie du gaz (3) espacées les unes des autres.

7. Dispositif selon la revendication 5 ou 6, **caractérisé en ce que** les brûleurs à gaz (5) en forme de barres s'étendent parallèlement aux profilés creux (11, 12).

8. Dispositif selon l'une quelconque des revendications précédentes, **caractérisé en ce que** le dispositif d'aspiration est formé d'un canal d'extraction (7) en forme de cheminée s'étendant vers le haut dans la position de service, **en ce que** la chambre ou une des chambres (2) des profilés creux (11, 12) communique à son extrémité frontale avec le canal d'extraction (7) qui est ouvert à son extrémité supérieure, et **en ce que** l'autre extrémité frontale opposée des chambres (2) est ouverte.

9. Dispositif selon la revendication 8, **caractérisé en ce que** le canal d'extraction (7) en forme de cheminée est pourvu de fentes d'entrée d'air (8, 9) latérales.

10. Dispositif selon la revendication 9, **caractérisé en ce que** le canal d'extraction (7) en forme de cheminée est de section rectangulaire.

11. Dispositif selon l'une quelconque des revendications précédentes, **caractérisé en ce que** la ou les chambre(s) (1, 2) communique(nt) en outre avec un dispositif de refroidissement forcé, par exemple un ventilateur à air, une pompe à fluide réfrigérant ou similaire.

12. Dispositif selon l'une quelconque des revendications précédentes, **caractérisé en ce que** les profilés creux (11, 12) sont disposés à l'horizontale dans leur position de service et les gouttières d'écoulement (11) sont inclinées par rapport à l'horizontale.

13. Dispositif selon l'une quelconque des revendications précédentes, **caractérisé en ce qu'**il est prévu deux chambres (1, 2) situées l'une au-dessus de l'autre.

14. Dispositif selon la revendication 4, **caractérisé en ce que** l'installation de chauffage se compose d'un espace de combustion destiné à être rempli de charbon de bois et l'ouverture d'aspiration est formée par une ouverture d'arrivée d'air pour l'alimentation en air primaire de l'espace de combustion en vue de la combustion du charbon de bois.

15. Dispositif pour la préparation de plats, par exemple dispositif pour grillades ou pierrades, avec une installation pour le chauffage de l'air et éventuellement un grill, dans lequel il est prévu au-dessus de l'installation pour le chauffage de l'air plusieurs gouttières d'écoulement espacées les unes des autres, de préférence disposées dans un plan, pour les sucs de cuisson des aliments, **caractérisé en ce qu'**il est prévu entre l'installation de chauffage de l'air (5) et les gouttières d'écoulement (11) au moins un dispositif (28) destiné à dévier l'air chauffé par l'installation de chauffage (5) en direction des gouttières d'écoulement (11).

16. Dispositif selon la revendication 15, **caractérisé en ce que** le dispositif pour la déviation de l'air chauffé se compose de tôles profilées (28) parallèles à l'axe longitudinal des gouttières d'écoulement (11) et placées en-dessous de celles-ci.

17. Dispositif selon la revendication 16, **caractérisé en ce que** les tôles profilées (28) ont en coupe transversale la forme d'une demi-ellipse partagée sur son axe principal, la partie concave de la demi-ellipse étant tournée vers les gouttières d'écoulement (11).

18. Dispositif selon la revendication 16 ou 17, **caractérisé en ce que** les tôles profilées (28), vues en coupe transversale, s'étendent au moins sur toute la largeur des gouttières d'écoulement (11).

19. Dispositif selon la revendication 16, 17 ou 18, **caractérisé en ce que** des profilés creux (12) pouvant être parcourus par un fluide de refroidissement, par exemple de l'air ou de l'eau, sont formés sur la face inférieure de chacune des gouttières d'écoulement (11).

20. Dispositif selon la revendication 19, **caractérisé en ce que** les profilés creux sont formés chacun d'un profilé de base (12) composé de parois de fond (24, 25) disposées en forme de V en coupe transversale et de parois verticales (22, 23) qui se raccordent à celles-ci sur les côtés, et **en ce que** les gouttières d'écoulement (11) ayant une section en forme de V sont posées sur les parois verticales (22, 23) du profilé de base (12).

21. Dispositif selon la revendication 19 ou 20, **caractérisé en ce que** les profilés creux (12) sont faits d'un matériau isolant thermique.

22. Dispositif selon la revendication 21, **caractérisé en ce que** le matériau isolant thermique est composé de fibres de céramique.

23. Dispositif selon les revendications 21 et 22, **caractérisé en ce que** les profilés creux (12) sont entièrement enveloppés, l'enveloppe étant de préférence formée au moins partiellement d'un métal ou d'un alliage métallique, d'émail, d'un verre ou d'un mélange de verres ou d'un plastique résistant à haute température, par exemple de Téflon ou similaire.

24. Dispositif selon l'une quelconque des revendications 19 à 23, **caractérisé en ce que** les profilés creux (12) sur lesquels sont posés les gouttières d'écoulement (11) communiquent à une extrémité frontale, par un canal de communication (6), avec un dispositif pour la création d'une circulation de fluide de refroidissement utilisant une différence de pression créée dans le dispositif de préparation, de préférence un dispositif d'aspiration (19), et **en ce que** l'autre extrémité frontale opposée est ouverte.

25. Dispositif selon la revendication 24, **caractérisé en ce que** l'installation de chauffage se compose de plusieurs brûleurs à gaz (5), de préférence en forme de barres, dont les conduites d'arrivée de gaz (10) traversent les canaux de communication (6) correspondants, une ouverture d'aspiration de l'air (19) constituant le dispositif d'aspiration étant ménagée dans la conduite d'arrivée de gaz à l'intérieur du canal de communication (6).

26. Dispositif selon la revendication 25, **caractérisé en ce que** les brûleurs à gaz (5) présentent sur leur longueur des buses de sortie du gaz (3) espacées les unes des autres.

27. Dispositif selon la revendication 25 ou 26, **caractérisé en ce que** les brûleurs à gaz (5) en forme de barres s'étendent parallèlement aux profilés creux (12) et aux gouttières d'écoulement (11).

28. Dispositif selon la revendication 27, **caractérisé en ce que** l'installation de chauffage se compose d'un espace de combustion destiné à être rempli de charbon de bois et le dispositif pour la création d'une circulation de fluide de refroidissement est formé par une ouverture d'arrivée d'air dans l'espace de combustion.

29. Dispositif selon l'une quelconque des revendications 19 à 28, **caractérisé en ce que** les profilés creux (11, 12) sont formés en deux parties.

30. Dispositif selon la revendication 29, **caractérisé en ce que** les profilés creux sont formés d'un profilé de base (12) composé de deux traverses (24, 25) ayant une section en forme de V en coupe transversale et écartées l'une de l'autre et de deux parois verticales (22, 23) raccordées latéralement à celles-ci ainsi que d'une gouttière d'écoulement (11) ayant une section en forme de V, posée sur les parois (22, 23) du profilé de base (12).

31. Dispositif selon la revendication 29 ou 30, **caractérisé en ce que** les profilés creux (11, 12) sont faits d'un matériau isolant thermique.

32. Dispositif selon la revendication 31, **caractérisé en ce que** le matériau isolant thermique est composé de fibres de céramique.

33. Dispositif selon la revendication 31 ou 32, **caractérisé en ce que** les profilés creux (12) sont entièrement enveloppés, l'enveloppe étant de préférence formée au moins partiellement d'un métal ou d'un alliage métallique, d'émail, d'un verre ou d'un mélange de verres ou d'un plastique résistant à haute température, par exemple de Téflon ou similaire.
